# EUROPÄISCHE PATENTSCHRIFT

(11) **EP 2 501 862 B1**
(45) Veröffentlichungstag und Bekanntmachung des Hinweises auf die Patenterteilung: **15.08.2018**
(21) Anmeldenummer: 10779463.8
(22) Anmeldetag: 02.11.2010
(51) Int. Cl.: E02B 17/08, E02B 17/04, B66F 1/02

(54) **OFFSHORE-PLATTFORM UND VERFAHREN ZUM ANSTEUERN EINER OFFSHORE-PLATTFORM**
OFFSHORE PLATFORM AND METHOD FOR CONTROLLING AN OFFSHORE PLATFORM
PLATE-FORME EN MER ET PROCÉDÉ DE COMMANDE D'UNE PLATE-FORME EN MER

(30) Priorität: 18.11.2009 DE 102009053530
(43) Veröffentlichungstag der Anmeldung: 26.09.2012
(73) Patentinhaber: Robert Bosch GmbH, 70469 Stuttgart (DE)
(72) Erfinder: IJMKER, Leo, NL-5345 TJ Oss (NL)
(74) Vertreter: Thürer, Andreas
(86) Internationale Anmeldenummer: PCT/EP2010/006666
(87) Internationale Veröffentlichungsnummer: WO 2011/060883

(56) Entgegenhaltungen:
- EP-A1- 0 024 766
- DE-A1- 3 234 177
- DE-A1- 3 340 319
- FR-A1- 2 259 781
- GB-A- 838 627
- GB-A- 838 627
- GB-A- 884 255
- US-A- 5 558 468

## Beschreibung

Die Erfindung betrifft eine Offshore-Plattform gemäß dem Oberbegriff des Patentanspruchs 1 und ein Verfahren zum Ansteuern einer derartigen Offshore-Plattform.

Im Zuge des verstärkten Einsatzes alternativer Energiequellen gelangen beispielsweise Windkraftanlagen zu immer größerer Bedeutung. So wurde Ende 2009 vor Borkum ein sogenannter Offshore-Windpark in Betrieb genommen dessen Windenergieanlagen (WKA) außer Sichtweite von der Küste am Meeresgrund verankert sind. Die Montage dieser WKA erfolgt beispielsweise mit Hilfe einer Offshore-Plattform, die über eine Vielzahl von Stützen am Meeresboden abgestützt ist und die sich zur Montage der Windenergieanlagen aus dem Wasser herausheben lässt.

In der GB 838, 627 ist eine Offshore-Plattform offenbart, bei der die Relativbewegung zwischen den Stütze und der Plattform über Hydraulikzylinder erfolgt, die sich mit der jeweiligen Stütze verriegeln lassen und dann durch Ausfahren die Plattform entlang der Stütze nach oben bewegen oder - in kinematischer Umkehr - die Stütze bei schwimmender Plattform relativ zur Plattform bewegen. Nach einem Hub dieses Zylinders wird der plattformseitige Endabschnitt dieses Zylinders mit der Stütze verriegelt und der andere Endabschnitt entriegelt, so dass der Hydraulikzylinder zum nächsten Hub eingefahren werden kann. Danach erfolgt wiederum die Verriegelung mit der Stütze, so dass mit dem nächsten Intervall die Plattform wiederum entsprechend des Hub des Zylinders angehoben werden kann. Ein derartiger Step-By-Step-Betrieb ist zeitaufwendig. Dies ist insbesondere bei Offshore-Anwendungen problematisch, da die Plattform während des Verfahrens relativ anfällig bei Wellengang und dergleichen ist. Des weiteren können Montagearbeiten an der WKA nur bei gutem Wetter durchgeführt werden, so dass nicht produktive Zeiten, die durch das Verfahren der Offshore-Plattform verursacht sind möglichst vermieden werden sollen.

Zur Ausräumung dieses Nachteils wird in der US 4 497 591 eine Offshore-Plattform beschrieben, bei der die Verstellung über einen Rack-Pinion-Mechanismus erfolgt. Dabei sind jeder Stütze zwei Hydraulikzylinderpaare zugeordnet, deren Kolbenstangen jeweils mit einem Zahnrad verbunden sind, das mit einer Verzahnung an der Stütze kämmt. Diese Zahnräder lassen sich über eine Verriegelungseinrichtung blockieren. Die Zylindergehäuse dieser Hydraulikzylinderpaare sind jeweils mit der Plattform verbunden. Durch Ausfahren bzw. Einfahren der Zylinder kann bei verriegeltem Zahnrad die Plattform entsprechend angehoben oder abgesenkt werden. Dabei ist jeweils eines der Zylinderpaare zur Verstellung der Plattform wirksam, während das andere Zylinderpaar bei entriegelten Zahnrädern in eine Ausgangsposition zurückgefahren wird, so dass bei Durchfahren des Hubs des erstgenannten Zylinderpaars die Zahnräder des in seine Ausgangsposition zurückgefahrenen anderen Zylinderpaars verriegelt werden, so dass im Anschluss die Plattform durch dieses Zylinderpaar angehoben oder abgesenkt werden kann - d. h., es ist jeweils nur eines der Zylinderpaare in Wirkeingriff, während das jeweils andere Zylinderpaar in die Ausgangsposition zurückgefahren wird. Mit einer derartigen Lösung ist eine im Wesentlichen kontinuierliche Bewegung der Plattform einstellbar.

In der US 3 722 863 ist eine Offshore-Plattform gezeigt, bei der anstelle der aufwendigen Rack-Pinion-Konstruktion eine etwas robustere Lösung dargestellt ist, bei der die Relativverstellung zwischen Plattform und Stützen ebenfalls über Hydraulikzylinder erfolgt, die alternierend in Wirkeingriff gebracht werden. Bei dieser Lösung wird die Plattform über die Hydraulikzylinder abgestützt, wobei deren Kolbenstangen über Klauen mit einer Verzahnung der Stütze verriegelt sind. Eine entsprechende Verriegelung ist auch für die Plattform selbst vorgesehen, so dass diese direkt mit der zugeordneten Stütze verriegelbar ist. Auch bei dieser Variante werden die Hydraulikzylinder oder Hydraulikzylinderpaare alternierend angesteuert, um eine möglichst kontinuierliche Bewegung der Plattform oder der Stützen zu gewährleisten.

Um eine Überlastung der hydraulischen Komponenten zu vermeiden, ist bei dem erstgenannten Stand der Technik gemäß der GB 838 627 jeder Druckraum der Zylinderanordnung über ein Druckbegrenzungsventil mit einem Tank verbindbar - dieser Druckmittelströmungspfad dient auch als Ablauf für den sich verkleinernde Druckraum der Zylinderanordnung. Die Einstellung dieses Druckbegrenzungsventils erfolgt in Abhängigkeit von der maximal auftretenden Last - diese stellt sich dann ein, wenn die Plattform aus dem Wasser heraus gehoben ist. Das Druckbegrenzungsventil wird dann auf einem Begrenzungsdruck eingestellt, der um eine Sicherheitsdruckdifferenz höher ist als derjenige Druck, der sich in dem die Last abstützenden Druckraum bei maximaler Last einstellt. Dementsprechend sind alle Druckbegrenzungsventile auf diesen sehr hohen Druckwert eingestellt. Problematisch dabei ist, dass über die Pumpe bei der Betätigung der Hydraulikzylinderanordnung das im Ablauf gelegene Druckbegrenzungsventil erst geöffnet werden kann, wenn der Druck in diesem Druckraum den vorbestimmten Wert überschreitet. Dies ist insbesondere dann nachteilig, wenn vergleichsweise geringe Lasten auf die Hydraulikzylinderanordnung wirken. Dies ist beispielsweise dann der Fall, wenn die Stützen zum Meeresboden hin abgesenkt werden, da dann nur das vergleichsweise geringe Stützengewicht von der Hydraulikzylinderanordnung abgestützt werden muss. Auch in diesem Fall sind die Druckbegrenzungsventile auf den hohen Begrenzungsdruck eingestellt, sodass über die Pumpe ein entsprechend hoher Druck aufgebracht werden muss, um das Ablaufseitige Druckbegrenzungsventil zu öffnen - die damit einhergehenden Drosselverluste sind erheblich.

Demgegenüber liegt der Erfindung die Aufgabe zugrunde, eine Offshore-Plattform und ein Verfahren zur Ansteuerung einer derartigen Offshore-Plattform zu schaffen, bei denen die Drosselverluste verringert sind.

Diese Aufgabe wird im Hinblick auf die Offshore-Plattform durch die Merkmalskombination des Patentanspruchs 1 und im Hinblick auf das Verfahren durch die Merkmale des nebengeordneten Patentanspruchs 8 gelöst.

Vorteilhafte Weiterbildungen der Erfindung sind Gegenstand der Unteransprüche.

Die erfindungsgemäße Offshore-Plattform hat eine Vielzahl von Stützen, die zum Abheben der Plattform vom Wasserspiegel mittels einer hydraulischen Hubeinrichtung auf den Meeresboden absenkbar sind. Jeder dieser Stützen sind zumindest zwei Hydraulikzylinderanordnungen zugeordnet, deren Druckräume über eine Ventileinrichtung mit einer Pumpenanordnung oder einem Ablauf verbindbar sind. Die Hydraulikzylinderanordnungen sind einerseits an der Plattform abgestützt und andererseits über eine Verriegelung lösbar mit der zugeordneten Stütze verbindbar. Die Plattform hat des Weiteren eine Steuereinheit, über die die Zylinderanordnungen derart ansteuerbar sind, dass während einer Relativbewegung zwischen Plattform und Stütze eine der Zylinderanordnungen über die Verriegelung mit der Stütze verriegelt ist, während die andere Zylinderanordnung entriegelt ist und in eine Ausgangsposition zurückgefahren wird, um zur Übernahme der Last mit der Stütze verriegelt zu werden. Jeder der Druckräume der Hydraulikzylinderanordnungen ist zur Maximaldruckbegrenzung über ein Druckbegrenzungsventil mit einem Tank verbindbar. Erfindungsgemäß wird der an den Druckbegrenzungsventilen eingestellte Begrenzungsdruck über die Steuereinheit in Abhängigkeit von der wirksamen Last verstellt. D.h., der Begrenzungsdruck der Druckbegrenzungsventile wird beispielsweise bei einer aus dem Wasser herausgehobenen Plattform auf einen vergleichsweise hohen Wert eingestellt, während er bei schwimmender Plattform und Absenken der Stützen oder Anheben der Stützen vom Meeresboden auf einen wesentlich geringeren Wert eingestellt wird - dementsprechend sind die Drosselverluste im Ablauf gegenüber den herkömmlichen Lösungen ganz erheblich reduziert.

Die Ansteuerung der Druckbegrenzungsventile ist besonders einfach, wenn der Druck in den Druckräumen der Hydraulikzylinderanordnungen über Druckaufnehmer erfasst wird, deren Signal zur Ansteuerung der Druckbegrenzungsventile über die Steuereinheit ausgewertet wird.

Um die Lastübernahme möglichst weich zu gestalten, kann über die Steuereinheit der Druckmittelvolumenstrom zur lastübernehmenden Hydraulikzylinderanordnung während der Lastübernahme kurzzeitig gegenüber dem für die vorgesehene Geschwindigkeit entsprechenden Druckmittelvolumenstrom erhöht und der Druckmittelvolumenstrom zur lastabgebenden Hydraulikzylinderanordnung entsprechend verringert werden, sodass die hydraulische Leistung in der Summe in etwa konstant bleibt.

Bei einem weiteren Ausführungsbeispiel hat die Verriegelung einen Riegel an jeder Hydraulikzylinderanordnung, der in Verriegelungseingriff mit einer von einer Vielzahl von Verriegelungsaufnahmen an der Stütze bringbar ist.

Dieser Riegel kann vor dem Verriegelungseingriff vorgespannt sein, sodass er selbsttätig einrückt.

Der Riegel ist vorzugsweise ein Riegelbolzen, der in eine Ausnehmung eingreift.

Um die Betriebssicherheit der Anlage zu erhöhen, erfolgt die Ansteuerung der jeweiligen Hydraulikzylinderanordnungen und Druckbegrenzungsventile erst dann, wenn die Verriegelung der lastübernehmenden Hydraulikzylinderanordnung erfolgt ist und die lastabgebende Hydraulikzylinderanordnung entriegelt ist. Diese Verriegelung kann über Sensoren erfasst und zur Steuereinheit gemeldet werden.

Das erfindungsgemäße Verfahren zur Ansteuerung einer Offshore-Plattform arbeitet in der vorbeschriebenen Weise, d.h. über die Steuereinheit werden die Druckbegrenzungsventile derart verstellt, das der Begrenzungsdruck während des Betriebs der Plattform um ein vorbestimmtes Δp oberhalb der wirksamen Last liegt.

Bevorzugte Ausführungsbeispiele der Erfindung werden im Folgenden anhand schematischer Zeichnungen näher erläutert. Es zeigen:
Figur 1 eine Schemadarstellung einer Offshore-Plattform in unterschiedlichen Betriebszuständen;
Figur 2 eine Schemadarstellung einer Hubeinrichtung einer derartigen Offshore-Plattform;
Figur 3 eine hydraulische Schaltung der Hubeinrichtung aus Figur 2 und
Figur 4 eine Variante einer hydraulischen Schaltung für die Hubeinrichtung.

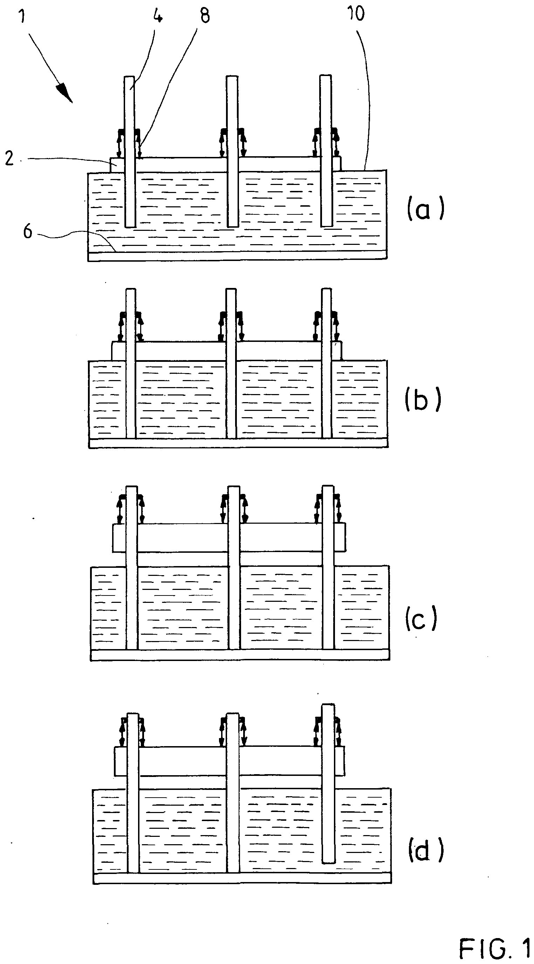

In Figur 1 ist der Grundaufbau einer erfindungsgemäßen Offshore-Plattform, im Folgenden Plattform 1 genannt, dargestellt. Eine derartige Plattform 1 kann als Arbeitsschiff (Barge) mit eigenem Antrieb oder als geschleppte Plattform - ähnlich wie eine Bohrinsel - ausgeführt sein und hat eine Arbeitsplattform 2, auf die die zur Montage erforderlichen Arbeitsgeräte angeordnet sind. Diese Arbeitsplattform 2 lässt sich über eine Vielzahl von Stützen, beispielsweise drei, vier oder sechs Stützen 4 - wie in Figur 1b gezeigt am Meeresboden 6 abstützen und dann durch Betätigung von Hubeinrichtungen 8 entlang dieser Stützen 4 vom Wasserspiegel 10 abheben, um die erforderlichen Montagearbeiten, beispielsweise die Montage einer WKA durchzuführen. Während der Fahrt zum Einsatzort sind die Stützen 4 gemäß Figur 1a über die Hubeinrichtungen 8 vom Meeresboden 6 abgehoben, wobei die Hubeinrichtungen 8 - wie im Folgenden noch näher erläutert - auf Druck belastet sind.

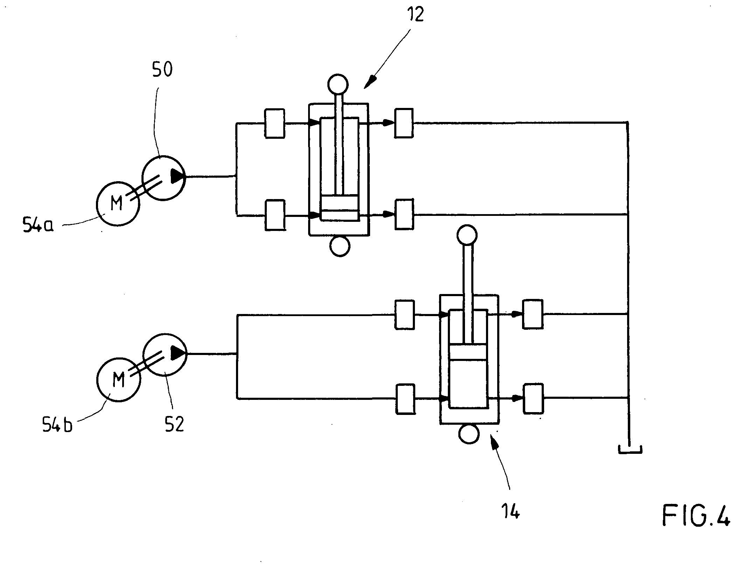

Sobald die Plattform 1 am Einsatzort angekommen ist, werden die Stützen 4 gemäß Figur 4b abgesenkt, bis sie sich am Meeresboden 6 abstützen können. Bei weiterer Betätigung der Hubeinrichtungen 8 wird die Arbeitsplattform 2 dann gemäß Figur 1c vom Meeresspiegel 10 abgehoben und in die vorbestimmte Arbeitsposition gebracht. In diesem Zustand sind die Hubeinrichtungen 8 gemäß Figur 1 mit einer vergleichsweise großen Kraft auf Zug beansprucht, während im Übergangszustand gemäß Figur 1b die Belastung der Hubeinrichtung 8 von Druck - auf Zugbelastung wechselt. Die Hubeinrichtungen 8 sind bei abgehobenen Stützen 4 lediglich mit einer geringen, dem Gewicht der Stützen entsprechenden Druckkraft beaufschlagt.

Figur 1d zeigt einen Zustand, bei dem die in dieser Figur rechts angeordnete Stütze 4 über die Hubeinrichtung aus dem Meeresboden 6 herausgezogen wird, während die anderen Stützen noch auf dem aufliegen - für dieses herausziehen der Stützen 4 aus dem Boden ist eine erhebliche Kraft aufzubringen - diese belastet die Hubeinrichtungen 8 auf Druck. Beim Anheben der Stützen 4 ist dies Kraft dann wesentlich geringer, da nur das Stützengewicht gehalten werden muss.

Die erfindungsgemäß hydraulisch betätigten Hubeinrichtungen 8 sind somit je nach Betriebszustand in 4-Quadranten-Betrieb mit unterschiedlichen Kräften und Bewegungsrichtungen beaufschlagt, die bei der Ansteuerung der Plattform 1 berücksichtigt werden müssen. Auf diese Kräfte wird im Folgenden noch näher eingegangen.

Wie Figur 1 des Weiteren entnehmbar ist, können mehrere Hubeinrichtungen 8 an jeder Stütze 4 angreifen, so dass die entstehenden Kräfte möglichst symmetrisch eingeleitet werden.

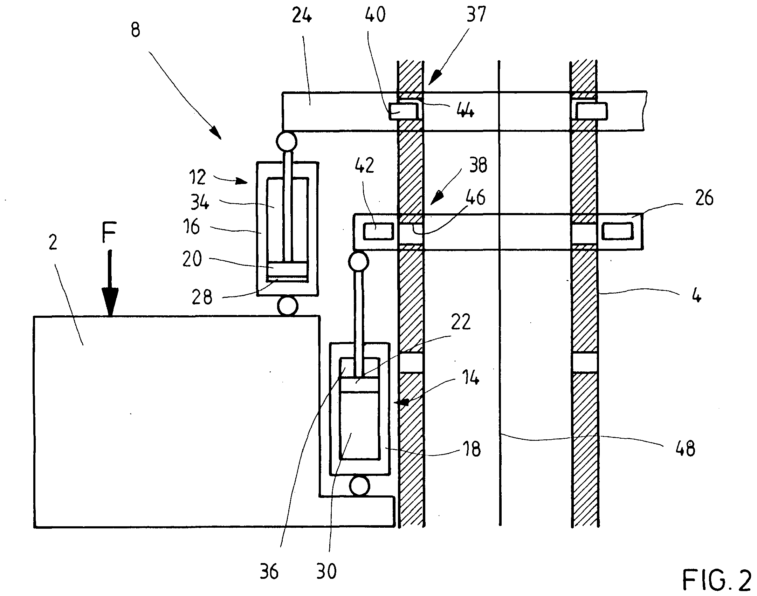

Der Grundaufbau der Hubeinrichtungen 8 soll nunmehr anhand der schematischen Darstellung in Figur 2 erläutert werden. Diese zeigt in stark schematisierter Weise einen Schnitt durch eine Stütze 4, an der die Arbeitsplattform 2 abgestützt ist. Die Hubeinrichtung 8 hat zumindest zwei Zylinderanordnungen 12, 14 die jeweils durch einen oder mehrere, vorzugsweise zwei Zylinder gebildet ist, die in Hubrichtung versetzt an der Stütze 4 bzw. der Plattform 2 angreifen. Beim dargestellten Ausführungsbeispiel sind die beiden Zylinderanordnungen 12, 14 jeweils mit ihren Zylindergehäusen 16, 18 an der Plattform 2 abgestützt, wobei diese Abstützung vorzugsweise gelenkig erfolgt, um leichte Relativverschwenkungen zwischen Plattform 2 und Stütze 4, die durch Wellengang verursacht sein können, auszugleichen. Im Zylindergehäuse 16, 18 ist jeweils ein Differentialkolben 20, 22 geführt, dessen Kolbenstange an einem Joch 24, 26 angreift, wobei diese Anbindung auch wieder gelenkig erfolgt.

Durch den Differentialkolben 20, 22 ist das Zylindergehäuse 16, 18 jeweils in einen Bodenraum 28, 30 und einem Ringraum 34, 36 unterteilt. Bodenraum und Ringraum werden im Folgenden allgemein auch als Druckraum oder Druckräume bezeichnet. An jedem Joch 24, 26 ist eine Verriegelung 37, 38 vorgesehen, über die das jeweilige Joch 24, 26 mit der Stütze 4 verriegelbar ist. Bei der konkreten Lösung hat die Verriegelung 37, 38 jeweils einen oder mehrere Riegelbolzen 40, 42, die zum Verriegeln in entsprechende Ausnehmungen 44, 46 der Stütze 4 eingreifen können. Gemäß der Darstellung in Figur 2 ist die Verriegelung 37, 38 symmetrisch zur Stützenachse 48 ausgebildet, so dass die Kräfte symmetrisch eingeleitet werden. Dabei kann beispielsweise ein weiterer Zylinder der Zylinderanordnung 12 an der in Figur 2 rechten Seite des Jochs 24 angreifen. Prinzipiell können mehrere derartiger Zylinder am Umfang der Stütze 4 verteilt sein und gruppenweise einem Joch zugeordnet werden.

Beim Ausführungsbeispiel gemäß Figur 2 ist die Verriegelung 38 des unteren Jochs 26 nicht in Wirkeingriff mit der Stütze 4, während die Hydraulikzylinderanordnung 12 über das Joch 24 mit der Stütze 4 verriegelt wird. Bei der Verriegelung sind die jeweiligen Zylinderanordnungen 12, 14 durch das Gewicht F der Plattform 2 auf Zug belastet, so dass entsprechend hohe Drücke in den Ringräumen 34, 36 wirken.

Zum Abheben der Arbeitsplattform 2 vom Meeresspiegel 10 wird - wie im Folgenden noch näher erläutert - Druckmittel in den Ringraum 34 der mit der Stütze 4 verriegelten Zylinderanordnung 12 gefördert, so dass sich der Ringraum 34 vergrößert und entsprechend der Bodenraum 28 verkleinert - das Zylindergehäuse 16 und damit die Plattform 2 wird dann in der Darstellung gemäß Figur 2 nach oben bewegt und angehoben.

In der Zwischenzeit wird bei der entriegelten Zylinderanordnung 14 Druckmittel in den Bodenraum 30 gefördert, so dass der Differentialkolben 22 ausfährt, bis der Riegelbolzen 42 in Überdeckung mit der nächsten, in Ausfahrrichtung benachbarten Ausnehmung 46 gelangt. Diese Position ist in Figur 2 gerade erreicht. Die dabei lasttragende Zylinderanordnung 12 hat in dieser Position ihren Hub nahezu beendet, so dass zum weiteren Bewegen der Plattform 2 der Riegelbolzen 42 der übernehmenden, ausgefahrenen Zylinderanordnung 14 in Verriegelungseingriff mit der Ausnehmung 46 der Stütze 4 gebracht wird und entsprechend der Riegelbolzen 40 der übergebenden, vollständig eingefahrenen Zylinderanordnung 12 entriegelt wird, so dass dessen Differentialkolben 20 ausgefahren werden kann, um den Riegelbolzen 40 mit einer über der Ausnehmung 44 liegenden, nicht dargestellten Ausnehmung der Stütze 4 in Verriegelungseingriff bringen zu können. Durch diese alternierende Ansteuerung der Zylinderanordnungen 12, 14 kann die Plattform 2 dann entlang der Stützen 4 abgehoben werden. In entsprechender Weise werden durch geeignete Ansteuerung der Zylinderanordnungen 12, 14 auch die anderen, in Figur 1 dargestellten Betriebszustände gesteuert. Bis hierhin entspricht diese Ansteuerung im Wesentlichen der Vorgehensweise, die aus Stand der Technik bekannt ist.

Erfindungsgemäß wird jedoch während der Lastübergabe von der Zylinderanordnung 12 an die Zylinderanordnung 14 der Druckmittelvolumenstrom in den Ringraum 36 der übernehmenden Zylinderanordnung 14 gegenüber demjenigen Druckmittelvolumenstrom erhöht, der zur vorbestimmten Bewegungsgeschwindigkeit der Plattform 2 erforderlich ist. Der Druckmittelvolumenstrom zum Ringraum 34 der übergebenden Zylinderanordnung 12 wird entsprechend verringert, 'wobei in diesem Übergangszustand beide Zylinderanordnungen 12, 14 mit der Stütze 4 verriegelt sind. Diese Erhöhung bzw. Verringerung der Druckmittelvolumenströme zu den Ringräumen 34, 36 der Zylinderanordnung 12, 14 erfolgt während eines gegenüber dem Gesamthub einer Zylinderanordnung 12, 14 vergleichsweise kurzen Zeitraums. Vergehen beispielsweise zum Einfahren der lasttragenden Zylinderanordnung 12, 14 drei bis vier Minuten, so stellt man die vorbeschriebene Druckmittelvolumenstromänderung während der Lastübergangsphase für etwa 20 Sekunden ein. Selbstverständlich sind auch Abweichungen von diesen Zeitvorgaben möglich, da diese stets von den vorliegenden Umweltbedingungen und auch von der Geometrie und dem Gewicht der Anlage abhängen.

Während dieser Veränderung des Druckmittelvolumenstroms wird die Last allmählich von der schneller einfahrenden, übernehmenden Zylinderanordnung 14 übernommen, während die Last an der übergebenden Zylinderanordnung 12 aufgrund der geringeren Bewegungsgeschwindigkeit langsam absinkt - sobald diese Last auf einen vorbestimmten Grenzwert nahe Null abgesunken ist, wird die übergebende Zylinderanordnung 12 entriegelt und wieder ausgefahren - der Zyklus kann von neuem beginnen, wobei durch diese erfindungsgemäße Druckmittelsteuerung eine nahezu kontinuierliche Verfahrgeschwindigkeit der Plattform 2 bzw. der Stütze 4 mit Bezug zur Plattform 2 realisierbar ist.

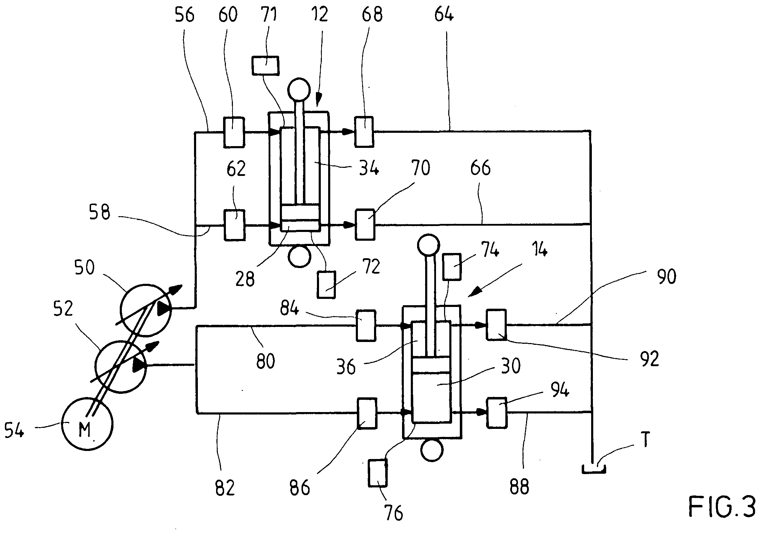

Figur 3 zeigt eine hydraulische Schaltung zur Ansteuerung der beiden Zylinderanordnungen 12, 14 in der vorbeschriebenen Weise.

Wie ausgeführt, erfordert die erfindungsgemäße Steuerung der Druckmittelvolumenströme in der Übergangsphase die Erhöhung des Druckmittelvolumenstroms zur lastübernehmenden Zylinderanordnung 14, während der Druckmittelvolumenstrom zur lastübergebenden Zylinderanordnung (hier Zylinderanordnung 12) entsprechend verringert wird, so dass die hydraulische Leistung und somit auch die Verfahrgeschwindigkeit der Arbeitsplattform 2 in etwa konstant bleibt.

Gemäß der Schaltung in Figur 3 ist jeder Zylinderanordnung 12, 14 eine eigene Verstellpumpe zugeordnet, die beim dargestellten Ausführungsbeispiel von einem gemeinsamen Motor, vorzugsweise einem Elektromotor 54 angetrieben werden. Die Pumpen 50, 52 sind vorzugsweise volumenstromgeregelt, so dass auch bei unterschiedlichen Lastzuständen der vorbestimmte Druckmittelvolumenstrom gewährleistet ist. Der Druckanschluss der Verstellpumpe 50 ist über eine Zulaufleitung 56 mit dem Ringraum 34 der Zylinderanordnung 12 und über eine weitere Zulaufleitung 58 mit dem Bodenraum 28 der Zylinderanordnung 12 verbunden. In jeder Zulaufleitung 56, 58 ist ein Steuerventil 60, 62 vorgesehen, das über eine nicht dargestellte Steuereinheit angesteuert werden kann, um die Druckmittelverbindung zwischen der Verstellpumpe 50 und dem Ringraum 34 bzw. dem Bodenraum 28 aufzusteuern bzw. zu schließen.

Der Ringraum 34 und der Bodenraum 28 sind des Weiteren über eine Ablaufleitung 64, 66 mit einem Tank T verbunden, aus dem die beiden Verstellpumpen 50, 52 Druckmittel ansaugen. In jeder Ablaufleitung 64, 66 ist ein Druckbegrenzungsventil 68, 70 vorgesehen, über das der Druck im jeweils zugeordneten Druckraum 34, 28 auf einen vorbestimmten Maximalwert begrenzt werden kann. Geeignete Druckbegrenzungsventile sind im Datenblatt RD 21050/02.03 der Bosch Rexroth AG beschrieben, auf die der Einfachheit halber hingewiesen wird. Eine Besonderheit der Schaltung besteht darin, dass diese Druckbegrenzungsventile 68, 70 über die Steuereinheit verstellbar sind, um den begrenzten Druck in Abhängigkeit von dem Betriebszustand der Zylidneranordnung 12 zu verändern. Der Druck in den Druckräumen 28, 34 und 30, 36 wird jeweils über einen Druckaufnehmer 71, 72; 74, 76 erfasst und an die nicht dargestellte Steuereinheit gemeldet, so dass die Druckbegrenzungsventile 68, 70 und auch die vorstehend beschriebenen Verriegelungen in Abhängigkeit vom Druck in diesen Druckräumen ansteuerbar sind.

Der der Zylinderanordnung 14 zugeordnete Zweig hat den gleichen Aufbau wie der vorbeschriebene Zweig der Hydraulikzylinderanordnung 12, d. h, die Verstellpumpe 52 ist über eine Zulaufleitung 80, 82 und darin angeordnete Steuerventile 84, 86 mit dem Ringraum 36 bzw. dem Bodenraum 30 verbunden. Diese sind wiederum über Ablaufleitungen 90, 88 und Druckbegrenzungsventile 92, 94 mit dem Tank verbindbar.

Wie in Figur 1 dargestellt, werden die Hubeinrichtungen (Zylinderanordnungen 12, 14) in Abhängigkeit vom jeweiligen Betriebszustand mit unterschiedlichen Kräften beaufschlagt.

Wird beispielsweise bei dem in Figur 1a dargestellten Betriebszustand die Stütze 4 bei schwimmender Arbeitsplattform 2 abgesenkt, so ist die aktive, verriegelte Zylinderanordnung 12, 14 mit einer negativen, ziehenden Last beaufschlagt, wobei Druckmittel in den jeweiligen Ringraum 34, 36 gefördert wird.

Zum Anheben der Arbeitsplattform 2 bei auf dem Meeresgrund aufliegenden Stützen 4 (Figuren 1b, 1c) wirkt aufgrund des hohen Gewichtes F der Arbeitsplattform 2 in dem Ringraum 34, 36 der jeweils aktiven Zylinderanordnung 12, 14 ein sehr hoher Druck - die Zylinderanordnung 12, 14 ist dabei mit einer positiven Last (auf Zug wirkend) beaufschlagt. Das Druckmittel wird dabei ebenfalls in den jeweiligen Ringraum 34, 36 gefördert.

Zum Absenken der Plattform über Wasser wirkt der entsprechend hohe Druck weiterhin in dem Ringraum 34, 36 der aktiven Zylinderanordnung 12, 14 wobei allerdings durch das Absenken eine ziehende Last wirkt und das Druckmittel in die Bodenseite 28, 30 der aktiven Zylinderanordnung 12, 14 gefördert werden muss.

Zum Anheben der Stützen 4 vom Meeresboden 6 in die Fahrposition ist nur eine vergleichsweise gering Kraft erforderlich, so dass der Druck in der Bodenseite 28, 30 der aktiven Zylinderanordnung 12, 14 entsprechend gering ist. Es wirkt eine positive Last und das Druckmittel wird in die jeweilige Bodenseite gefördert. Dabei ist zu beachten, dass die Kraft in der Bodenseite beim Herausziehen aus dem Meeresgrund 6, wie erläutert wesentlich höher sein kann.

Gemäß diesen Lastzuständen werden die Zylinderanordnungen 12, 14 im sogenannten 4-Quadranten-Betrieb angesteuert, wobei in den jeweiligen Druckräumen stark unterschiedliche Drücke anliegen können. Bei der herkömmlichen Lösung gemäß der GB 838,627 ist in dem Ablauf der Hydraulikzylinder ebenfalls jeweils ein Druckbegrenzungsventil angeordnet - dieses ist jedoch auf einen Wert eingestellt, der sich an dem Maximaldruck orientiert, der sich beim Ausheben der Arbeitsplattform einstellt - dieser Druck ist wesentlich höher als der Druck in den anderen Betriebszuständen (schwimmende Plattform, Ausfahren oder Einfahren der Stützen), so dass in diesen Betriebszuständen von der Pumpe ein sehr hoher Druck aufgebracht werden muss, um das jeweils im Ablauf gelegene Druckbegrenzungsventil aufzusteuern - die damit einhergehenden Drosselverluste sind erheblich.

Bei der erfindungsgemäßen Lösung werden diese Nachteile durch die Verstellbarkeit der Druckbegrenzungsventile 68, 70, 92, 94 während des Betriebs in Abhängigkeit von dem jeweiligen Lastzustand eingestellt. So wird beim Lastzustand gemäß Figur 1c das im Ablauf gelegene Druckbegrenzungsventil 70, 94 auf den aufgrund des hohen Plattformgewichtes wirksamen hohen Druck eingestellt ist. Beim Absenken der Plattform ist diese hohe Druckeinstellung solange wirksam, bis die Plattform auf dem Wasser aufsetzt und somit nur noch das Gewicht der Stütze 4 drückend auf die jeweilige aktive Zylinderanordnung 12, 14 wirkt - das dann im Ablauf gelegene Druckbegrenzungsventil 70, 94 wird dann auf einen entsprechend geringeren Wert eingestellt, um die Drosselverluste zu minimieren. Entsprechend erfolgt auch die Einstellung der im Ablauf gelegenen Druckbegrenzungsventile 68, 92 beim Anheben der Stützen 4 vom Meeresgrund 6 auf den dabei anliegenden niedrigen Druck eingestellt. Ein derart niedriger Druck wird beispielsweise auch nach dem Entriegeln der Zylinderanordnung 12, 14 und dem Ausfahren der jeweiligen Zylinderanordnung 12, 14 eingestellt, um die Drosselverluste zu minimieren.

Die Einstellung des Begrenzungsdrucks erfolgt erfindungsgemäß in Abhängigkeit vom jeweiligen Druck in den Druckräumen, der über die Druckaufnehmer 71, 72, 74, 76 erfasst und von der Steuereinheit ausgewertet wird. Der zu begrenzende Druck wird dabei um eine vorbestimmte Druckdifferenz höher als der im jeweiligen Ablaufseitigen Druckraum zu erwartende Druck eingestellt.

Die Ansteuerung der Verstellpumpen 50, 52 erfolgt so, dass die Geschwindigkeit und auch die Position der Arbeitsplattform 2 konstant gehalten werden kann, wobei zu berücksichtigen ist, dass die einzelnen Stützen in unterschiedlichen Höhen auf dem Meeresboden abgestützt sein können, so dass die jeder Stütze 4 zugeordneten Zylinderanordnungen 12, 14 individuell angesteuert werden müssen.

Bei der Umsteuerung der Druckbegrenzungsventile 68, 70, 92, 94 ist darauf zu achten, dass die Umstellung auf den niedrigeren Druck nicht zu früh erfolgt, da dann die wirkende Last nicht gehalten werden kann. Auf der anderen Seite resultiert ein zu späte Umstellung auf einen niedrigeren Druck in unnötigen Drosselverlusten, wie sie beim Stand der Technik stets auftreten.

Durch die erfindungsgemäße Ansteuerung der Druckbegrenzungsventile 68, 70, 92, 94 im Ablauf ist gewährleistet, dass die jeweiligen Zylinderanordnungen 12, 14 in jedem Betriebszustand vorgespannt sind, wobei diese Vorspannung in Abhängigkeit von der wirksamen Kraft eingestellt wird.

Die jeweilige von den Zylinderanordnungen 12, 14 aufzubringende Zylinderkraft berechnet sich aus der bodenseitigen Wirkfläche des jeweiligen Kolbens multipliziert mit dem Druck in der Bodenseite minus dem Produkt aus dem Druck an der Ringseite und der Ringfläche des jeweiligen Kolbens.

Der Begrenzungsdruck berechnet sich dann entsprechend auf der Bodenseite aus der Kolbenkraft geteilt durch die bodenseitige Kolbenfläche (Druck an der Bodenseite) plus der vorgenannten Sicherheitsdruckdifferenz. Entsprechend berechnet sich der Begrenzungsdruck auf der Stangenseite aus der Last F (Vorzeichen beachten) geteilt durch die Ringfläche des Kolbens (Druck im Ringraum) plus der vorgenannten Sicherheitsdruckdifferenz.

Durch geeignete Einstellung der Druckmittelvolumenströme und der im Ablauf gelegenen Druckbegrenzungsventile ist eine kontinuierliche Relativbewegung zwischen den Stützen 4 und der Arbeitsplattform 2 gewährleistet, wobei sehr hohe Verfahrgeschwindigkeiten einstellbar sind.

Bei dem vorbeschriebenen Ausführungsbeispiel sind zwei Verstellpumpen 50, 52 von einem gemeinsamen Motor angetrieben.

Figur 4 zeigt eine Variante, bei der jeder Hydraulikzylinderanordnung 12, 14 eine eigene Pumpe 50, 52 mit jeweils eigenem Motor 54a, 54b zugeordnet ist. Diese Pumpen 50, 52 können wiederum als Verstellpumpen ausgeführt sein. Beim dargestellten Ausführungsbeispiel werden Konstantpumpen verwendet, deren Volumenstrom über die Drehzahl der Motoren 54a bzw. 54b verändert wird, um den vorbestimmten Druckmittelvolumenstrom einzustellen. Im Übrigen entspricht das Ausführungsbeispiel gemäß Figur 4 demjenigen aus Figur 3, so dass unter Hinweis auf die diesbezüglichen Ausführungen auf weitere Erläuterungen verzichtet werden kann.

Wie bereits erwähnt, kann anstelle einer einzigen, vergleichsweise großen Pumpe 50, 52 auch eine Vielzahl von kleineren Pumpen verwendet werden, die von einem gemeinsamen Motor angetrieben werden oder aber, zur Veränderung des Druckmittelvolumenstroms auch mit jeweils einem Motor angetrieben werden, so dass einzelne Pumpen einer Pumpenanordnung zur Veränderung des Druckmittelvolumenstroms weggeschaltet werden können.

Die Ansteuerung der Pumpen kann nach einer Volumen- oder Drucksteuerung erfolgen.

Bei dem vorbeschriebenen Ausführungsbeispielen sind die Zylinderanordnungen 12, 14 so angeordnet, dass diese bei angehobener Arbeitsplattform 2 mit einer Zugkraft beaufschlagt sind. Das erfindungsgemäße Konzept lässt sich jedoch genauso bei Konstruktionen anwenden, bei denen die Arbeitsplattform 2 auf den Zylinderanordnungen 12, 14 abgestützt ist, so dass diese mit einer Druckkraft beaufschlagt sind. Aufgrund der hohen Belastungen der Kolbenstange werden bei einer derartigen Lösung die Zylinderanordnungen 12, 14 mit sehr hohen Knickkräften beaufschlagt, so dass die hängende Lagerung gemäß den beschriebenen Ausführungsbeispielen bevorzugt wird.

Bei der Steuerung der Druckmittelvolumenströme ist noch darauf zu achten, dass nach der Lastübernahme der Ringraum der übernehmenden Zylinderanordnung 12, 14 sehr klein ist und der Ringraum der übergebenden Zylinderanordnung 12, 14 maximal ist - die entsprechenden Kompressionsvolumina und unterschiedliche Druckänderungen durch Zuführen von Druckmittel in einen kleinen und dem gegenüber wesentlich größeren Druckraum sind zu berücksichtigen.

Offenbart sind eine Offshore-Plattform und ein Verfahren zur Ansteuerung einer derartigen Offshore-Plattform, bei der Stützen mit Bezug zur Plattform über eine Hubeinrichtung verstellbar sind. Erfindungsgemäß sind die Druckräume der Hubeinrichtung über Druckbegrenzungsventile mit einem Tank verbindbar, wobei der Begrenzungsdruck in Abhängigkeit vom Lastzustand verändert wird.

## Patentansprüche

1. Offshore-Plattform, umfassend:
- eine Vielzahl von Stützen (4);
- eine hydraulische Hubeinrichtung (8);
- eine Ventileinrichtung (60, 62; 84, 86);
- eine Pumpenanordnung (50, 52) und einen Ablauf (64, 66; 88, 90);
- eine Steuereinheit;
- eine Verriegelung (37, 38);
wobei die Stützen (4) zum Abheben der Plattform (2) vom Wasserspiegel (10) mittels der hydraulischen Hubeinrichtung (8) auf den Meeresboden absenkbar sind;
wobei die Hubeinrichtung (8) für jede Stütze (4) zumindest zwei Hydraulikzylinderanordnungen (12, 14) hat, deren Druckräume (28, 34; 30, 36) über die Ventileinrichtung (60, 62; 84, 86) mit der Pumpenanordnung (50, 52) und mit dem Ablauf (64, 66; 88, 90) verbunden sind;
wobei die zumindest zwei Hydraulikzylinderanordnungen (12, 14) einerseits an der Plattform (2) abgestützt und andererseits über die Verriegelung (37, 38) lösbar mit der Stütze (4) verbunden sind; und wobei die zumindest zwei Hydraulikzylinderanordnungen (12, 14) über die Steuereinheit derart ansteuerbar sind, dass während einer Relativbewegung zwischen der Plattform (2) und den Stützen (4) eine erste Hydraulikzylinderanordnung (12) über die Verriegelung (37, 38) mit der Stütze (4) verriegelt ist, während eine andere Hydraulikzylinderanordnung (12, 14) entriegelt ist und in eine Ausgangsposition zurückgefahren wird und dann zur Übernahme der Last mit der Stütze (4) verriegelbar ist, **dadurch gekennzeichnet dass** in dem Ablauf (64, 66, 88, 90) von jedem Druckraum (28, 34; 30, 36) der Hydraulikzylinderanordnung (12, 14) ein Druckbegrenzungsventil (68, 70; 92, 94) angeordnet ist, und dass die Druckbegrenzungsventile (68, 70; 92, 94) über die Steuereinheit verstellbar sind, so dass der Begrenzungsdruck während des Betriebs der Plattform (2) in Abhängigkeit von der wirksamen Last eingestellt ist.

2. Offshore-Plattform nach Patentanspruch 1, mit Druckaufnehmern (71, 72; 74, 76) zum Erfassen des Druckes in den Druckräumen (28, 34; 30, 36).

3. Offshore-Plattform nach Patentanspruch 1 oder 2, wobei die Steuereinheit den Druckmittelvolumenstrom zur lastübernehmenden Hydraulikzylinderanordnung (12, 14) während der Lastübernahme kurzzeitig gegenüber dem der vorgesehenen Geschwindigkeit entsprechenden Druckmittelvolumenstrom erhöht und den Druckmittelvolumenstrom zur lastabgebenden Hydraulikzylinderanordnung (12, 14) entsprechend verringert, sodass die hydraulische Leistung in etwa konstant bleibt.

4. Offshore-Plattform nach einem der vorhergehenden Ansprüche, wobei die Verriegelung (37, 38) einen Riegel (40, 42) an der Hydraulikzylinderanordnung (12, 14) hat, der in Verriegelungseingriff mit einer Vielzahl von Verriegelungsausnehmungen (44, 46) an der Stütze (4) bringbar ist, die in Hubrichtung hintereinander liegend angeordnet sind.

5. Offshore-Plattform nach Patentanspruch 4, wobei die Riegel (40, 42) der übernehmenden Hydraulikzylinderanordnung (12, 14) vorgespannt sind.

6. Offshore-Plattform nach Patentanspruch 4 oder 5, wobei der Riegel (40, 42) ein Riegelbolzen (40, 42) ist, der in eine Ausnehmung (44, 46) eingreift.

7. Offshore-Plattform nach einem der vorhergehenden Ansprüche, mit einem Sensor zum Erfassen des Verriegelungseingriffs.

8. Verfahren zum Ansteuern einer Offshore-Plattform umfassend:
- eine Vielzahl von Stützen (4);
- eine hydraulische Hubeinrichtung (8);
- eine Ventileinrichtung (60, 62,; 84, 86;
- eine Pumpenanordnung (50, 52) und einen Ablauf (64, 66; 88, 90);
- eine Steuereinheit;
- eine Verriegelung (37, 38);
wobei die Stützen (4) zum Abheben der Plattform (2) vom Wasserspiegel (10) mittels der hydraulischen Hubeinrichtung (8) auf den Meeresboden absenkbar sind;
wobei die Hubeinrichtung (8) für jede Stütze (4) zumindest zwei Hydraulikzylinderanordnungen (12, 14) hat, deren Druckräume (28, 34; 30, 36) über die Ventileinrichtung (60, 62; 84, 86) mit der Pumpenanordnung (50, 52) und mit dem Ablauf (64, 66; 88, 90) verbunden sind;
wobei die zumindest zwei Hydraulikzylinderanordnungen (12, 14) einerseits an der Plattform (2) abgestützt und andererseits über die Verriegelung (37, 38) lösbar mit der Stütze 4 verbunden sind;
und wobei die zumindest zwei Hydraulikzylinderanordnungen (12, 14) über die Steuereinheit derart ansteuerbar sind, dass während einer Relativbewegung zwischen der Plattform (2) und den Stützen (4) eine erste Hydraulikzylinderanordnung (12) über die Verriegelung (37, 38) mit der Stütze (4) verriegelt ist, während eine andere Hydraulikzylinderanordnung (12, 14) entriegelt ist und in eine Ausgangsposition zurückgefahren wird und dann zur Übernahme der Last mit der Stütze (4) verriegelbar ist,
wobei in dem Ablauf (64, 66, 88, 90) von jedem Druckraum (28, 34; 30, 36) der Hydraulikzylinderanordnung (12, 14) ein Druckbegrenzungsventil (68, 70; 92, 94) angeordnet ist,
**dadurch gekennzeichnet, dass**
die Druckbegrenzungsventile (68, 70; 92, 94) während des Betriebs der Plattform (2) über die Steuereinheit in Abhängigkeit von der wirksamen Last (F) verstellt werden.

9. Verfahren nach Patentanspruch 8, wobei der Begrenzungsdruck so eingestellt wird, dass er um ein vorbestimmtes Δp über dem im Druckraum (28, 34; 30, 36) anliegenden oder zu erwartenden Druck liegt.

10. Verfahren nach Patentanspruch 8 oder 9, wobei nur die im Ablauf liegenden Druckbegrenzungsventile (68, 70; 92, 94) verstellt werden.

## Claims

1. Offshore platform, comprising:
- a multiplicity of supports (4);
- a hydraulic lifting device (8);
- a valve device (60, 62; 84, 86);
- a pump arrangement (50, 52) and a drain (64, 66; 88, 90) ;
- a control unit;
- a locking means (37, 38);
where the supports (4) can be lowered onto the seabed by means of the hydraulic lifting device (8) in order to lift the platform (2) from the water level (10);
where the lifting device (8) for each support (4) has at least two hydraulic cylinder arrangements (12, 14), the pressure chambers (28, 34; 30, 36) of which are connected via the valve device (60, 62; 84, 86) to the pump arrangement (50, 52) and to the drain (64, 66; 88, 90);
where the at least two hydraulic cylinder arrangements (12, 14) are supported at one end on the platform (2) and at the other end are detachably connected to the support (4) via the locking means (37, 38);
and where the at least two hydraulic cylinder arrangements (12, 14) can be controlled via the control unit in such a way that, during a relative movement between the platform (2) and the supports (4), a first hydraulic cylinder arrangement (12) is locked to the support (4) via the locking means (37, 38), while another hydraulic cylinder arrangement (12, 14) is unlocked and retracted into an initial position and can then be locked to the support (4) in order to accept the load,
**characterized**
**in that** a pressure limiting valve (68, 70; 92, 94) is arranged in the drain (64, 66, 88, 90) from each pressure chamber (28, 34; 30, 36) of the hydraulic cylinder arrangement (12, 14), and
**in that** the pressure limiting valves (68, 70; 92, 94) are adjustable via the control unit, so that during the operation of the platform (2) the limiting pressure is adjusted on the basis of the effective load.

2. Offshore platform according to Patent Claim 1, having pressure transducers (71, 72; 74, 76) for detecting the pressure in the pressure chambers (28, 34; 30, 36) .

3. Offshore platform according to Patent Claim 1 or 2, wherein the control unit briefly increases the pressure medium volume flow to the load-accepting hydraulic cylinder arrangement (12, 14) during the load acceptance as compared with the pressure medium volume flow corresponding to the envisaged speed, and reduces the pressure medium volume flow to the load-transferring hydraulic cylinder arrangement (12, 14) accordingly, so that the hydraulic output remains approximately constant.

4. Offshore platform according to one of the preceding claims, wherein the locking means (37, 38) has a latch (40, 42) on the hydraulic cylinder arrangement (12, 14), which can be brought into locking engagement with a multiplicity of locking recesses (44, 46) on the support (4), which are arranged to be located one after another in the lifting direction.

5. Offshore platform according to Patent Claim 4, wherein the latches (40, 42) of the accepting hydraulic cylinder arrangement (12, 14) are preloaded.

6. Offshore platform according to Patent Claim 4 or 5, wherein the latch (40, 42) is a latching bolt (40, 42) which engages in a recess (44, 46).

7. Offshore platform according to one of the preceding claims, having a sensor for detecting the locking engagement.

8. Method for controlling an offshore platform comprising:
- a multiplicity of supports (4);
- a hydraulic lifting device (8);
- a valve device (60, 62; 84, 86);
- a pump arrangement (50, 52) and a drain (64, 66; 88, 90) ;
- a control unit;
- a locking means (37, 38);
where the supports (4) can be lowered onto the seabed by means of the hydraulic lifting device (8) in order to raise the platform (2) from the water level (10);
where the lifting device (8) for each support (4) has at least two hydraulic cylinder arrangements (12, 14), the pressure chambers (28, 34; 30, 36) of which are connected via the valve device (60, 62; 84, 86) to the pump arrangement (50, 52) and to the drain (64, 66; 88, 90) ;
where the at least two hydraulic cylinder arrangements (12, 14) are supported at one end on the platform (2) and at the other end are detachably connected to the support (4) via the locking means (37, 38);
and where the at least two hydraulic cylinder arrangements (12, 14) can be controlled via the control unit in such a way that, during a relative movement between the platform (2) and the supports (4), a first hydraulic cylinder arrangement (12) is locked to the support (4) via the locking means (37, 38), while another hydraulic cylinder arrangement (12, 14) is unlocked and retracted into an initial position and can then be locked to the support (4) in order to accept the load,
where a pressure limiting valve (68, 70; 92, 94) is arranged in the drain (64, 66, 88, 90) from each pressure chamber (28, 34; 30, 36) of the hydraulic cylinder arrangement (12, 14),
**characterized in that** the pressure limiting valves (68, 70; 92, 94) are adjusted via the control unit on the basis of the effective load (F) during the operation of the platform (2).

9. Method according to Patent Claim 8, wherein the limiting pressure is set in such a way that it lies by a predetermined Δp above the pressure present or to be expected in the pressure chamber (28, 34; 30, 36) .

10. Method according to Patent Claim 8 or 9, wherein only the pressure limiting valves (68, 70; 92, 94) located in the drain are adjusted.

## Revendications

1. Plate-forme en mer, comprenant :
- une pluralité de piliers (4) ;
- un dispositif de levage hydraulique (8) ;
- un dispositif de soupape (60, 62 ; 84, 86) ;
- un agencement de pompe (50, 52) et un écoulement (64, 66 ; 88, 90) ;
- une unité de commande ;
- un verrouillage (37, 38) ;
les piliers (4) pouvant être abaissés sur le fond marin au moyen du dispositif de levage hydraulique (8) pour soulever la plate-forme (2) du niveau d'eau (10) ;
le dispositif de levage (8) présentant pour chaque pilier (4) au moins deux agencements de vérins hydrauliques (12, 14) dont les espaces de pression (28, 34 ; 30, 36) sont connectés par le biais du dispositif de soupape (60, 62 ; 84, 86) à l'agencement de pompe (50, 52) et à l'écoulement (64, 66 ; 88, 90) ;
les au moins deux agencements de vérins hydrauliques (12, 14) étant supportés d'une part sur la plate-forme (2) et étant d'autre part connectés de manière amovible au pilier (4) par le biais du verrouillage (37, 38) ;
et les au moins deux agencements de vérins hydrauliques (12, 14) pouvant être commandés par le biais de l'unité de commande de telle sorte que pendant un mouvement relatif entre la plate-forme (2) et les piliers (4), un premier agencement de vérin hydraulique (12) soit verrouillé au pilier (4) par le biais du verrouillage (37, 38) tandis qu'un autre agencement de vérin hydraulique (12, 14) est déverrouillé et est ramené dans une position de départ puis peut être verrouillé au pilier (4) pour reprendre la charge,
**caractérisée en ce**
**qu'**une soupape de limitation de pression (68, 70 ; 92, 94) est disposée dans l'écoulement (64, 66, 88, 90) de chaque espace de pression (28, 34 ; 30, 36) de l'agencement de vérin hydraulique (12, 14),
et en ce que les soupapes de limitation de pression (68, 70 ; 92, 94) peuvent être réglées par le biais de l'unité de commande de telle sorte que la pression de limitation soit ajustée en fonction de la charge effective pendant le fonctionnement de la plate-forme (2).

2. Plate-forme en mer selon la revendication 1, comprenant des transducteurs de pression (71, 72 ; 74, 76) pour détecter la pression dans les espaces de pression (28, 34 ; 30, 36).

3. Plate-forme en mer selon la revendication 1 ou 2, dans laquelle l'unité de commande augmente le débit volumique de fluide sous pression vers l'agencement de vérin hydraulique (12, 14) reprenant la charge pendant la reprise de la charge brièvement par rapport au débit volumique de fluide sous pression correspondant à la vitesse prévue et réduit de manière correspondante le débit volumique de fluide sous pression vers l'agencement de vérin hydraulique (12, 14) fournissant la charge de telle sorte que la puissance hydraulique reste approximativement constante.

4. Plate-forme en mer selon l'une quelconque des revendications précédentes, dans laquelle le verrouillage (37, 38) présente un verrou (40, 42) au niveau de l'agencement de vérin hydraulique (12, 14), lequel peut être amené en prise de verrouillage avec une pluralité de logements de verrouillage (44, 46) sur le pilier (4), lesquels sont disposés les uns derrière les autres dans la direction de levage.

5. Plate-forme en mer selon la revendication 4, dans laquelle les verrous (40, 42) de l'agencement de vérin hydraulique (12, 14) reprenant la charge sont précontraints.

6. Plate-forme en mer selon la revendication 4 ou 5, dans laquelle le verrou (40, 42) est un boulon de verrouillage (40, 42) qui s'engage dans un évidement (44, 46).

7. Plate-forme en mer selon l'une quelconque des revendications précédentes, comprenant un capteur pour détecter l'engagement de verrouillage.

8. Procédé pour commander une plate-forme en mer comprenant :
- une pluralité de piliers (4) ;
- un dispositif de levage hydraulique (8) ;
- un dispositif de soupape (60, 62,; 84, 86 ;
- un agencement de pompe (50, 52) et un écoulement (64, 66 ; 88, 90) ;
- une unité de commande ;
- un verrouillage (37, 38) ;
les piliers (4) pouvant être abaissés sur le fond marin au moyen du dispositif de levage hydraulique (8) pour soulever la plate-forme (2) du niveau d'eau (10) ;
le dispositif de levage (8) présentant pour chaque pilier (4) au moins deux agencements de vérins hydrauliques (12, 14) dont les espaces de pression (28, 34 ; 30, 36) sont connectés par le biais du dispositif de soupape (60, 62 ; 84, 86) à l'agencement de pompe (50, 52) et à l'écoulement (64, 66 ; 88, 90) ;
les au moins deux agencements de vérins hydrauliques (12, 14) étant supportés d'une part sur la plate-forme (2) et étant d'autre part connectés de manière amovible au pilier (4) par le biais du verrouillage (37, 38) ;
et les au moins deux agencements de vérins hydrauliques (12, 14) pouvant être commandés par le biais de l'unité de commande de telle sorte que pendant un mouvement relatif entre la plate-forme (2) et les piliers (4), un premier agencement de vérin hydraulique (12) soit verrouillé au pilier (4) par le biais du verrouillage (37, 38) tandis qu'un autre agencement de vérin hydraulique (12, 14) est déverrouillé et est ramené dans une position de départ puis peut être verrouillé au pilier (4) pour reprendre la charge,
une soupape de limitation de pression (68, 70 ; 92, 94) étant disposée dans l'écoulement (64, 66, 88, 90) de chaque espace de pression (28, 34 ; 30, 36) de l'agencement de vérin hydraulique (12, 14), **caractérisé en ce que**
les soupapes de limitation de pression (68, 70 ; 92, 94) sont réglées par le biais de l'unité de commande en fonction de la charge effective (F) pendant le fonctionnement de la plate-forme (2).

9. Procédé selon la revendication 8, dans lequel la pression de limitation est ajustée de telle sorte qu'elle soit située au niveau d'une Δp prédéterminée au-dessus de la pression régnant ou attendue dans l'espace de pression (28, 34 ; 30, 36).

10. Procédé selon la revendication 8 ou 9, dans lequel seulement les soupapes de limitation de pression (68, 70 ; 92, 94) situées dans l'écoulement sont réglées.
